# EUROPÄISCHE PATENTANMELDUNG

(11) **EP 4 682 469 A1**
(43) Veröffentlichungstag der Anmeldung: **21.01.2026**
(21) Anmeldenummer: 25188065.4
(22) Anmeldetag: 08.07.2025
(51) Int. Cl.: G01C 21/00, G01S 5/02, G01S 7/41, G01S 13/06, G01S 13/72, G01S 13/88

(54) **BESTIMMUNG EINES STANDORTS SOWIE EINE AUSRICHTUNG EINES SENSORS**

(30) Priorität: 18.07.2024 DE 102024002326
(71) Anmelder: Diehl Defence GmbH & Co. KG, 88662 Überlingen (DE)
(72) Erfinder: Seyfarth, Stefan, 91052 Erlangen (DE); Barth, Robin, 91448 Emskirchen (DE)
(74) Vertreter: Diehl Patentabteilung

(57) **Zusammenfassung**

Die Erfindung betrifft ein Verfahren (100), bei welchem mittels eines Sensors (10) eine Information betreffend eine Form einer Umgebung erfasst wird (102). Des Weiteren wird ein Standort sowie eine Ausrichtung des Sensors (10) auf Basis eines Abgleichs der erfassten (102) Information betreffend die Form der Umgebung mit vorbekannten topographischen Daten ermittelt (104).

## Beschreibung

Die Erfindung betrifft ein Verfahren, eine mobile Vorrichtung zur Durchführung des Verfahrens, ein Computerprogramm sowie ein computerlesbares Medium.

Mobile Sensorsysteme zur Luftraumüberwachung und/oder -verteidigung erfordern häufig eine genaue Kenntnis über deren Standort sowie eine Ausrichtung eines zugehörigen Sensors. Bislang werden hierzu Informationen eines satellitengestützten Navigationssystems und/oder eines Trägheitsnavigationssystems herangezogen. Bei satellitengestützten Navigationssystemen, wie beispielsweise einem globalen Navigationssatellitensystem, kann der Standort und die Ausrichtung des Sensors auf Basis von Signalen ermittelt werden, welche durch die Satelliten ausgesandt und bereitgestellt werden. Eine Genauigkeit des Standorts sowie der Ausrichtung ist dabei in der Regel abhängig von einer Sichtbarkeit der Satelliten sowie einer relativen Anordnung der Satelliten zueinander. Allerdings können die von den Satelliten ausgesandten Signale leicht gestört werden, da diese häufig nur sehr schwach sind. Daher werden beispielsweise Störsender eingesetzt, mittels welchen die Signale der Satelliten überlagert werden oder ein Empfang dieser Signale verhindert wird. Infolgedessen wird häufig ein unrichtiger Standort sowie eine unrichtige Ausrichtung ermittelt oder eine Ermittlung des Standorts oder der Ausrichtung auf Basis des satellitengestützten Navigationssystems gar unmöglich gemacht. Zusätzlich oder alternativ werden daher Trägheitsnavigationssysteme zum Zwecke einer Ermittlung des Standorts sowie der Ausrichtung des Sensors vorgesehen. Zwar kann dadurch in der Regel verhindert werden, dass mithilfe externer Störsender eine Genauigkeit des Standorts sowie der Ausrichtung beeinträchtigt wird, jedoch erfordern Trägheitsnavigationssysteme eine vorbestimmte Einschwingzeit, um eine erforderliche Genauigkeit zur Ermittlung des Standorts sowie der Ausrichtung zu erreichen. Darüberhinaus variiert bei Trägheitsnavigationssystemen üblicherweise eine Genauigkeit in Abhängigkeit eines Breitengrads. Im Bereich um den Äquator liegt eine größte Genauigkeit vor. In Richtung der Pole nimmt die Genauigkeit dahingegen mit zunehmendem Breitengrad ab. Ferner besteht die Möglichkeit, den Standort sowie die Ausrichtung des betrachteten Sensors mit einem magnetischen Kompass zu ermitteln. Aufgrund der vergleichsweise geringen Genauigkeit wird dieses Vorgehen jedoch lediglich im Falle einer starken Störung oder eines Ausfalls des Trägheitsnavigationssystems und/oder des satellitengestützten Navigationssystems gewählt.

Eine Aufgabe der Erfindung ist es, ein verbessertes Verfahren zur Ermittlung eines Standorts sowie einer Ausrichtung eines Sensors bereitzustellen.

Diese Aufgabe wird gelöst durch ein Verfahren mit den Merkmalen des unabhängigen Anspruchs 1.

Des Weiteren liegt der Erfindung die Aufgabe zugrunde, eine mobile Vorrichtung zur Durchführung des Verfahrens anzugeben.

Diese Aufgabe wird gelöst durch eine Vorrichtung mit den Merkmalen des nebengeordneten gegenständlichen Anspruchs.

Ferner liegen der Erfindung die Aufgaben zugrunde, ein Computerprogramm sowie ein computerlesbares Medium bereitzustellen.

Diese Aufgaben werden gelöst durch ein Computerprogramm mit den Merkmalen des nebengeordneten Computerprogrammanspruchs sowie durch ein computerlesbares Medium mit den Merkmalen des nebengeordneten Anspruchs 15.

Vorteilhafte Weiterbildungen sind jeweils Gegenstand abhängiger Unteransprüche.

Das erfindungsgemäße Verfahren sieht vor, dass mittels des Sensors eine Information betreffend eine Form einer Umgebung erfasst wird. Des Weiteren wird ein Standort sowie eine Ausrichtung des Sensors auf Basis eines Abgleichs der erfassten Informationen betreffend die Form der Umgebung mit vorbekannten topographischen Daten ermittelt. Zweckmäßigerweise handelt es sich um ein computerimplementiertes Verfahren.

Unter den topographischen Daten sollen im vorliegenden Zusammenhang Daten im Sinne der Topographie als Teilgebiet der Kartographie verstanden werden, welche üblicherweise auf einer detaillierten Vermessung, Darstellung und/oder Beschreibung einer geographischen Oberfläche beruhen. Anhand topographischer Daten können beispielsweise ein Relief einer geographischen Oberfläche, darauf befindliche Gewässer und/oder Verkehrswege sowie ein Bewuchs identifiziert werden.

Zweckmäßigerweise ist der genannte Sensor dazu eingerichtet, eine Information betreffend eine Richtung, einen Abstand, eine Art und/oder eine Position eines Objekts zu erfassen. Vorzugweise werden mittels des Sensors Daten auf Basis einer elektrooptischen Entfernungsmessung und/oder einer funkgestützten Ortung erfasst. Beispielhaft kann der Sensor als ein Radar oder ein Lidar ausgeführt sein.

Der Abgleich mit vorbekannten topographischen Daten ermöglicht eine rasche Ermittlung des Standorts sowie der Ausrichtung des Sensors. Ein Einfluss externer Störquellen auf eine Genauigkeit des Standorts sowie der Ausrichtung des Sensors kann minimiert werden. Im einzelnen Anwendungsfall, wie beispielsweise bei der bodengebundenen Luftabwehr, können dadurch Radaranlagen schnell und zuverlässig einsatzbereit gemacht werden. Im Bedarfsfall kann eine Einsatzbereitschaft des Sensors nach einer Veränderung eines Standorts und/oder einer Ausrichtung rasch wiederhergestellt werden. Dies ermöglicht eine zuverlässige Verteidigung eines Luftraums sowie eine rasche Auffassung und Aufklärung von feindlichen Angriffsobjekten.

Eine vorteilhafte Weiterbildung sieht vor, dass mittels des Sensors ein Höhenprofil der Umgebung als die Information betreffend die Form der Umgebung erfasst wird. Der Standort sowie die Ausrichtung des Sensors werden daraufhin auf Basis eines Abgleichs des erfassten Höhenprofils mit in einem digitalen Oberflächenmodell hinterlegten vorbekannten topographischen Daten ermittelt.

Unter einem digitalen Oberflächenmodell soll im Zusammenhang mit der vorliegenden Erfindung ein auf Basis gemessener topographischer Daten erstelltes digitales Modell verstanden werden, welches ein Höhenprofil wenigstens eines Teils einer Erdoberfläche nebst darauf befindlichen Objekten, wie einer Bebauung, Straßen, Gewässer und/oder einem Bewuchs, abbildet. Üblicherweise basieren digitale Oberflächenmodelle auf digitalen Geländemodellen, welche ausschließlich auf Daten betreffend ein Höhenprofil eines Geländes wenigstens eines Teils der Erdoberfläche basieren.

Eine Verwendung von vorbekannten digitalen Oberflächenmodellen ermöglicht eine aufwandsgünstige und zuverlässige Durchführung des Verfahrens. Überdies können hochaufgelöste und hochgenaue digitale Oberflächenmodelle verwendet werden, um einen Fehler bei der Ermittlung des Standorts sowie der Ermittlung der Ausrichtung des Sensors kleinzuhalten.

In einer weiteren vorteilhaften Weiterbildung wird auf Basis der mittels des Sensors erfassten Information betreffend die Form der Umgebung ein digitales Modell erstellt. Der Standort sowie die Ausrichtung des Sensors werden sodann anhand eines Abgleichs des erstellten digitalen Modells mit dem vorbekannten digitalen Oberflächenmodell ermittelt. Dadurch kann ein rascher und zeiteffizienter Abgleich erfolgen. Des Weiteren kann der Standort sowie die Ausrichtung des Sensors auf diese Weise aufwandsgünstig mit einer hohen Genauigkeit ermittelt werden. Ferner kann der Abgleich auf Basis eines iterativen Vorgehens durchgeführt werden, bei welchem zuverlässig eine Übereinstimmung des digitalen Modells mit dem vorbekannten digitalen Oberflächenmodell aufgefunden werden kann. Liegt eine hinreichend gute Übereinstimmung vor, so kann die Ausrichtung sowie der Standort des Sensors leicht und aufwandsgünstig ermittelt werden. Im bevorzugten Anwendungsfall werden zur effizienten Durchführung des Verfahrens computerimplementierte Mustererkennungsalgorithmen verwendet. Dadurch kann ein Abgleich des erstellten digitalen Modells mit dem vorgegebenen digitalen Oberflächenmodell beschleunigt werden.

Vorzugsweise wird die Information betreffend die Form der Umgebung aus mittels des Sensors erfassten Stördaten gewonnen. Bereits mittels des Sensors erfasste, jedoch bislang nicht genutzte Informationen betreffend eine Umgebung können zum Zwecke einer Herstellung einer Einsatzbereitschaft des Sensors herangezogen werden. Dies ermöglicht es, ein effizientes und aufwandsgünstiges Verfahren bereitzustellen.

Bei den genannten Stördaten handelt es sich im vorliegenden Zusammenhang bevorzugterweise um die von dem Sensor erfasste Daten, welche sich von einem Zielobjekt von Interesse unterscheiden oder eine Erfassung des Zielobjekts in der Regel erschweren. Stördaten können daher beispielsweise Reflexionen, Echos, durch Mehrfachausbreitung erzeugte Daten und/oder aufgrund von Dopplereffekten erzeugte Daten betreffen. Im bevorzugten Anwendungsfall werden die Stördaten derart erfasst, dass eine Information betreffend eine Entfernung, eine Position und/oder ein relativer Raumwinkel bezogen auf den Sensor von Reflexionen im dreidimensionalen Raum erfasst wird. Bevorzugterweise werden Informationen betreffend die Form der Umgebung aus Stördaten gewonnen, welche beispielsweise auf Reflexionen an Bewuchs, Gewässern und/oder geologischen Erhebungen oder Senkungen basieren.

Eine vorteilhafte Ausführungsvariante sieht vor, dass die Information betreffend die Form der Umgebung derart aus den erfassten Stördaten gewonnen wird, dass zunächst sich bewegende Objekte aus diesen Stördaten extrahiert werden. Anhand geeigneter Filter können sich bewegende Objekte aufwandsgünstig extrahiert werden. Dadurch verbleiben ortsfeste oder vermeintlich statische Objekte, anhand derer die Form der Umgebung rasch ermittelt werden kann. Auf diese Weise sind zudem aufwandsgünstig meteorologische Effekte, wie Niederschlag, Wind oder Reflexionseffekte an variierenden Luftdruckunterschieden extrahierbar. Daraufhin kann sodann das zuvor genannte digitale Modell betreffend die Form der Umgebung erstellt werden. Im bevorzugten Anwendungsfall wird das Verfahren in einem stationären Betriebszustand eines mobilen Sensors durchgeführt.

Überdies sieht eine vorteilhafte Weiterbildung des Verfahrens vor, dass aufeinanderfolgend mehrere digitale Modelle auf Basis der mittels des Sensors erfassten Information betreffend die Form der Umgebung erstellt werden. Auf Basis eines Vergleichs der genannten mehreren digitalen Modelle wird eine Information betreffend eine Klassifizierung einer Geländeart, sich langsam bewegende Objekte, sich aus einer Deckung innerhalb eines Sichtbereichs des Sensors heraus bewegende Objekte und/oder eine Mehrwegausbreitung ermittelt. Dadurch kann eine Qualität des digitalen Modells fortlaufend verbessert werden. Weitergehende Informationen betreffend beispielsweise angreifender feindlicher Kräfte oder sich langsam bewegende Objekte, wie Hubschrauber, können schnell und zuverlässig aufgefasst werden. Dies ermöglicht es, über die Form der Umgebung hinaus weitere Informationen aus den Stördaten zu gewinnen. Auf diese Weise kann der Sensor sowie zumindest damit verknüpfte taktische Einheiten beispielsweise vor einem Überraschungsangriff geschützt werden. Ferner kann im bevorzugten Anwendungsfall erkannt werden, ob der Sensor selbst Angriffsziel ist.

Bevorzugterweise wird der Standort sowie die Ausrichtung des Sensors zusätzlich auf Basis von Informationen eines satellitengestützten Navigationssystems und/oder eines Trägheitsnavigationssystems ermittelt. Eine Genauigkeit einer Bestimmung des Standorts sowie der Ausrichtung des Sensors kann dadurch weiter verbessert werden. Fehler, welche im Rahmen des genannten Abgleichs bei der Ermittlung des Standorts sowie der Ausrichtung entstehen, können im bevorzugten Fall auf Basis der Informationen des satellitengestützten Navigationssystems und/oder des Trägheitsnavigationssystems verringert werden.

In einer vorteilhaften Ausführungsvariante ist vorgesehen, dass eine Information betreffend eine Genauigkeit eines mittels des globalen satellitengestützten

Navigationssystems und/oder mittels des Trägheitsnavigationssystems ermittelten Standorts sowie Ausrichtung des Sensors mithilfe des auf Basis des vorgenannten Abgleichs ermittelten Standorts sowie der dadurch ermittelten Ausrichtung des Sensors ermittelt wird. Neben herkömmlichen Methoden zum Zwecke einer Bestimmung einer Genauigkeit von Daten basierend auf einem satellitengestützten Navigationssystem, welche beispielsweise auf einer Anzahl an verfügbaren Satelliten, einer relativen Stellung der Satelliten zueinander und/oder einem Signal-zu-Rausch-Verhältnis betreffend ein Empfangssignal basieren, kann der mittels des vorgenannten Abgleichs ermittelte Standort sowie die dadurch ermittelte Ausrichtung des Sensors genutzt werden. In einem bevorzugten Anwendungsfall können dadurch Störsender oder Störsignale identifiziert werden und gegebenenfalls Fehlinformationen gefiltert werden. Ferner ist denkbar, dass diese Erkenntnis an weitere Sensoren und/oder weitere Einheiten gegeben wird, um eine fehlerhafte Standortbestimmung oder eine falsche Bestimmung einer Ausrichtung zu verhindern. Des Weiteren kann dadurch auf eine verbesserte Weise eine Genauigkeit des Trägheitsnavigationssystems bestimmt werden. Ein Einfluss eines Breitengrads, eines möglichen Driftverhaltens des Trägheitsnavigationssystems und/oder einer Streuung von Messwerten des Trägheitsnavigationssystems können rasch und zuverlässig erkannt werden. Dadurch kann die Genauigkeit des Trägheitsnavigationssystems mit einer hohen Zuverlässigkeit ermittelt werden. Ein Korrekturerfordernis kann daher rasch erkannt werden und gegebenenfalls kann eine entsprechende Korrektur vorgenommen werden.

Eine weitere vorteilhafte Ausführungsvariante sieht vor, dass basierend auf einer Information betreffend die Genauigkeit des mittels des satellitengestützten Navigationssystems, mittels des Trägheitsnavigationssystems und/oder auf Basis des vorgenannten Abgleichs der mittels des Sensors erfassten Information betreffend die Form der Umgebung mit vorbekannten topologischen Daten jeweils ermittelten Standorts sowie der auf diese Weise ermittelten Ausrichtung des Sensors eine Bestimmung des Standorts sowie der Ausrichtung des Sensors durchgeführt wird. Solche Informationen, welche mit einer hohen Unsicherheit belegt sind, können unbeachtet bleiben oder lediglich mit einer geringen Gewichtung zum Zwecke der Bestimmungen des Standorts sowie der Ausrichtung herangezogen werden. Beispielsweise kann dadurch festgestellt werden, ob Signale eines satellitengestützten Navigationssystems gestört oder manipuliert sind. Manipulierte Signale können daher auf einfache Weise bei der Bestimmung des Standorts oder der Ausrichtung unberücksichtigt bleiben. Ferner kann einem Messwert des Trägheitsnavigationssystems bei Standorten mit kleinem Breitengrad im Vergleich zu Standorten mit höherem Breitengrad ein erhöhtes Gewicht zugeordnet werden.

Überdies sieht eine vorteilhafte Weiterbildung vor, dass als Sensor ein Radar vorgesehen wird, welcher bei einer Überwachung und/oder Verteidigung eines vorbestimmten Luftraums verwendet wird. Erforderliche Standortwechsel oder ein Wechsel einer Ausrichtung des Radars kann auf Basis des erfindungsgemäßen Verfahrens rasch und aufwandsgünstig durchgeführt werden. Ein Sichtbereich des Radars kann rasch und zuverlässig auf eine prognostizierte Trajektorie eines Zielobjekts ausgerichtet werden. Des Weiteren kann auf zuverlässige und betriebssichere Weise eine Einsatzbereitschaft des Radars zur Überwachung und Verteidigung des vorbestimmten Luftraums hergestellt werden. Im einzelnen Anwendungsfall kann für eine Luftzielmessung ein absoluter Fehler auf Basis eines digitalen Oberflächenmodells abgeschätzt werden. Mithilfe einer Kenntnis des absoluten Fehlers kann eine verbesserte Steuerung eines Sensor-Effektor-Systems, in welches der Sensor eingebunden ist, erreicht werden. Ferner können Drifteffekte eines Radars rasch erkannt und gegebenenfalls korrigiert werden.

Vorteilhafterweise ist der Sensor als ein mobiler Sensor ausgeführt, dessen Standort sowie Ausrichtung in einem stationären Betriebszustand ermittelt wird. Ein Wechsel zwischen verschiedenen stationären Betriebszuständen kann rasch und zuverlässig durchgeführt werden. Bei verschiedenen stationären Betriebszuständen kann jeweils ein Standort und/oder die Ausrichtung des Sensors geändert werden. Derartige Änderungen können rasch ermittelt werden, um eine zuverlässige Einsatzbereitschaft zu erreichen. Des Weiteren können verschiedene Störeinflüsse auf einfache Weise erkannt und aufgedeckt werden. Dadurch können Objekte von Interesse mittels des Sensors mit einer hohen Genauigkeit geortet und verfolgt werden. Im bevorzugten Anwendungsfall kann dadurch ein Luftraum effizient und ressourcenschonend verteidigt werden. Zudem kann dadurch eine hohe Abfangwahrscheinlichkeit für ein Sensor-Effektor-System bereitgestellt werden. Feindliche Bewegungen können zuverlässig und rasch aufgefasst und/oder aufgeklärt werden. Des Weiteren kann mithilfe eines Standortwechsels eine Entdeckung des Sensors erschwert werden.

Mittels der erfindungsgemäßen mobilen Vorrichtung wird das erfindungsgemäße Verfahren in einem stationären Betriebszustand der mobilen Vorrichtung durchgeführt.

Die erfindungsgemäße mobile Vorrichtung weist einen Sensor auf, welcher dazu eingerichtet ist, einen Luftraum zu überwachen. Die mobile Vorrichtung kann nach einem Standortwechsel oder einer Veränderung der Ausrichtung aufwandsgünstig einsatzbereit gemacht werden. Dabei kann ein neuer Standort und/oder eine neue Ausrichtung rasch und aufwandsgünstig mit einer hohen Genauigkeit ermittelt werden. Auf zeitaufwändige und gegebenenfalls mit hohen Unsicherheiten behaftete Bestimmungen des Standorts sowie der Ausrichtung eines versetzten Sensors kann verzichtet werden. Im einzelnen Anwendungsfall kann schnell auf einen feindlichen Angriff reagiert werden. Beispielsweise kann der Sensor kurzzeitig in Deckung verbracht werden. Des Weiteren kann eine Aufklärung der mobilen Vorrichtung vermieden werden, indem diese in regelmäßigen Abständen versetzt wird. Daraufhin kann dennoch rasch und zuverlässig eine Einsatzbereitschaft der mobilen Vorrichtung wiederhergestellt werden. Im bevorzugten Anwendungsfall kann auf diese Weise ein Sensor-Effektor-System mit hoher Abfangwahrscheinlichkeit und geringer Ausfallwahrscheinlichkeit realisiert werden.

In einer vorteilhaften Weiterbildung ist vorgesehen, dass die mobile Vorrichtung als ein mobiles Radarsystem zur Überwachung des Luftraums mit einem Radarsensor ausgeführt ist. Feindliche Objekte innerhalb des zu überwachenden Luftraums können rasch und mit einer hohen Genauigkeit erkannt und geortet werden. Sensor-Effektor-Systeme können mithilfe der mobilen Vorrichtung feindliche Objekte mit einer hohen Zuverlässigkeit und einer hohen Auffasswahrscheinlichkeit unterstützt werden.

Überdies sieht die Erfindung ein Computerprogramm vor, welches bei dessen Ausführung die mobile Vorrichtung gemäß der Erfindung dazu veranlasst, das erfindungsgemäße Verfahren durchzuführen.

Ferner sieht die Erfindung ein computerlesbares Medium vor. Dieses weist Instruktionen auf, welche die erfindungsgemäße mobile Vorrichtung dazu veranlassen, das erfindungsgemäße Verfahren durchzuführen.

Bei dem computerlesbaren Medium kann es sich beispielsweise um eine CD-ROM, eine DVD, einen USB- oder Flash-Speicher oder um ein nicht körperliches Medium, wie einen Datenstrom und/oder ein digitales Trägersignal handeln.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale sowohl mit dem erfindungsgemäßen Verfahren als auch mit dem erfindungsgemäßen System gemäß den jeweils unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, welche im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden. Bei den Figuren handelt es sich um schematische, nicht maßstabsgetreue Darstellungen.

Es zeigen:
- FIG 1: eine Illustration eines Beispiels des erfindungsgemäßen Verfahrens zur Ermittlung eines Standorts sowie einer Ausrichtung eines Sensors anhand eines schematischen Ablaufdiagramms;
- FIG 2: ein Ausführungsbeispiel der erfindungsgemäßen mobilen Vorrichtung, welche exemplarisch als ein mobiles Radarsystem ausgeführt ist.

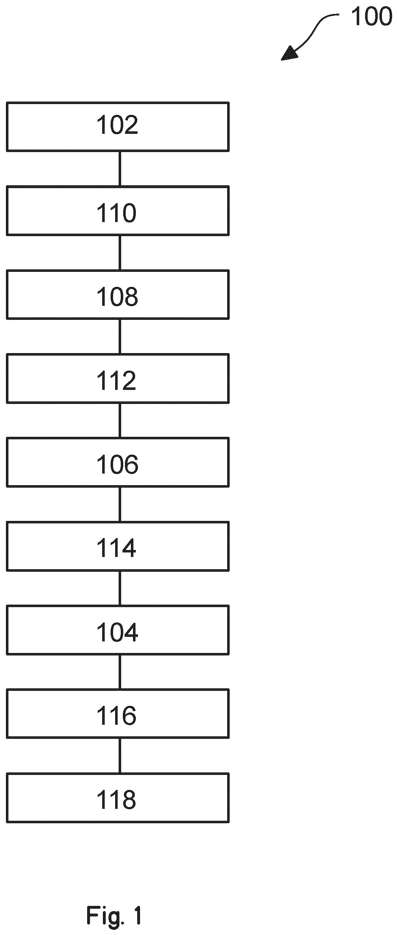

FIG 1 zeigt ein Beispiel eines Verfahrens 100, mittels welchem ein Standort sowie eine Ausrichtung eines Sensors 10 ermittelt wird 104.

Das vorliegend beschriebene Beispiel des Verfahrens 100 sieht vor, dass mittels des Sensors 10 eine Information betreffend eine Form einer Umgebung erfasst wird 102. Beispielhaft ist der genannte Sensor 10 als ein Radar 10 ausgeführt. Um eine Information betreffend die Form der Umgebung zu erfassen 102, wird im vorliegend beschriebenen Beispiel des Verfahrens 100 eine sogenannte Clutterkarte erstellt. Beispielhaft werden hierzu mit abgesenkter Blickrichtung des Radars 10 Stördaten erfasst 110. Stördaten sind in der Regel ungewünscht, können vorliegend jedoch genutzt werden, um Informationen betreffend eine Form der Umgebung zu erfassen 102. Die Clutterkarte weist Informationen zu erfassten 102 Reflexionen auf, welche beispielhaft einen Winkel, eine Entfernung, eine Position und/oder ein Signal-zu-Rausch-Verhältnis einer jeden Reflexion betreffen. Des Weiteren sieht das vorliegend beschriebene Beispiel des Verfahrens 100 vor, dass aus den mittels des Radars 10 erfassten 110 Stördaten Informationen betreffend ein Höhenprofil der Umgebung gewonnen werden 108. Zu diesem Zweck werden vorliegend beispielhaft sich bewegende Objekte aus den erfassten Stördaten 110 extrahiert 112. Bevorzugterweise erfolgt diese Extraktion mithilfe von geeigneten Filtern. Dadurch können auf einfache Weise Flugzeuge, Autos, Helikopter oder andere sich bewegende Objekte aus den gewonnenen 110 Stördaten entnommen werden 112.

In einer bevorzugten Ausführungsform sieht das vorliegend beschriebene Beispiel des Verfahrens 100 vor, dass auf Basis der mittels des Radars 10 erfassten 102 Information betreffend die Form der Umgebung ein digitales Modell erstellt wird 106. Im vorliegenden Zusammenhang werden zu diesem Zwecke die erfassten 110 sowie gefilterten Stördaten herangezogen, um ein digitales Modell eines Höhenprofils der Umgebung zu erstellen 106.

Beispielhaft wird vorliegend mithilfe eines Abgleichs des erstellten 106 digitalen Modells mit einem vorbekannten digitalen Oberflächenmodell der Standort sowie die Ausrichtung des Radars 10 ermittelt 104. Als vorbekanntes digitales Oberflächenmodell wird bevorzugterweise ein vorbekanntes digitales Höhenmodell verwendet. Bei dem digitalen Höhenmodell handelt es sich beispielhaft um ein sogenanntes "Digital Elevation Model", welches mithin unter der Abkürzung DEM bekannt ist. Die in dem digitalen Oberflächenmodell hinterlegten vorbekannten topographischen Daten werden sodann mit den erfassten 102 Informationen betreffend das Höhenprofil der Umgebung abgeglichen. Ein solcher Abgleich wird bevorzugterweise mithilfe computerimplementierter Mustererkennungsalgorithmen durchgeführt. Auf diese Weise kann schnell eine Übereinstimmung zwischen den erfassten Informationen 102 und den vorbekannten Daten ermittelt werden 104. Alternativ oder zusätzlich kann das erstellte 106 digitale Modell iterativ auf Übereinstimmungen mit dem vorbekannten digitalen Oberflächenmodell untersucht werden.

Eine bevorzugte Ausführungsform sieht vor, dass aufeinanderfolgend mehrere digitale Modelle auf Basis der mittels des Radars 10 erfassten 102 Informationen betreffend die Form der Umgebung erstellt werden 106. Diese mehreren digitalen Modelle können dazu genutzt werden, eine Genauigkeit des Standorts sowie der Ausrichtung des Radars 10 zu verbessern. Ferner können die mehreren digitalen Modelle dazu herangezogen werden, um eine Information betreffend eine Klassifizierung einer Geländeart, sich langsam bewegende Objekte, sich aus einer Deckung innerhalb eines Sichtbereichs des Radars 10 heraus bewegende Objekte und/oder eine Mehrwegausbreitung zu ermitteln 114. Auf einfache Weise können dadurch zusätzliche Informationen auf Basis der ermittelten 102 Informationen betreffend die Form der Umgebung gewonnen werden. Dadurch kann eine Qualität des erstellten 106 digitalen Modells verbessert werden. Des Weiteren kann eine Sicherheit des Radars 10 mithilfe der zusätzlichen Informationen gesteigert werden. Beispielsweise können sich langsam bewegende Hubschrauber oder aus einem Hinterhalt angreifende feindliche Kräfte rasch und zuverlässig aufgefasst werden. Ferner können gegebenenfalls sich unterhalb eines üblichen Sichtbereichs des Radars 10 bewegende Objekte aufgefasst werden.

Des Weiteren sieht das vorliegend beschriebene Beispiel des Verfahrens 100 vor, dass der Standort sowie die Ausrichtung des Radars 10 zusätzlich auf Basis von Informationen eines satellitengestützten Navigationssystems sowie auf Basis von Informationen eines Trägheitsnavigationssystems ermittelt werden 104. Auf diese Weise kann eine Genauigkeit bei einer Bestimmung 118 des Standorts sowie der Ausrichtung des Radars 10 verbessert werden. Im bevorzugten Anwendungsfall wird eine Information betreffend eine Genauigkeit des auf Basis des vorgenannten Abgleichs ermittelten Standorts sowie der Ausrichtung des Radars 10 ermittelt 116. Hierzu können beispielhaft Fehler im digitalen Höhenprofil, systematische Winkelfehler sowie Fehler in einer Lagewinkelbestimmung des Radars 10 sowie Fehler berücksichtigt werden, welche durch den vorgenannten Abgleich selbst verursacht sind. Eine Kenntnis der Genauigkeit des anhand des vorgenannten Abgleichs ermittelten 104 Standorts sowie der Ausrichtung des Radars 10 ermöglichen es, Effektoren eines nicht näher dargestellten Sensor-Effektor-Systems mittels des Radars 10 auf eine verbesserte Weise zu steuern. So kann beispielsweise eine Abfangwahrscheinlichkeit von einem mittels des Radars 10 erfassten 102 Objekts unter Berücksichtigung der genannten Genauigkeit verbessert werden.

Ferner sieht das vorliegend beschriebene Beispiel des Verfahrens 100 vor, dass eine Information betreffend eine Genauigkeit eines mittels des satellitengestützten Navigationssystems sowie mittels des Trägheitsnavigationssystems jeweils ermittelten 104 Standorts sowie der Ausrichtung des Radars 10 auf eine dem Fachmann bekannte Weise ermittelt wird 116. Zusätzlich sieht das vorliegend beschriebene Beispiel des Verfahrens 100 vor, dass der auf Basis des Abgleichs der erfassten 102 Informationen mit den vorbekannten topographischen Daten ermittelte 104 Standort sowie die Ausrichtung des Radars 10 zum Zwecke einer Ermittlung 116 der Information betreffend die Genauigkeit des mittels des satellitengestützten Navigationssystems sowie mittels des Trägheitsnavigationssystems jeweils ermittelten Standorts sowie der Ausrichtung des Radars 10 herangezogen wird. Externe Störeinflüsse oder Drifteffekte können dadurch rasch aufgedeckt werden. Vorzugsweise werden diese Störeinflüsse und Unsicherheiten vor einer Ermittlung 116 einer Information betreffend die Genauigkeit des globalen satellitengestützten Navigationssystems sowie des Trägheitsnavigationssystems berücksichtigt.

Sodann ist vorgesehen, dass zur Ermittlung 104 des Standorts sowie der Ausrichtung des Radars 10 eine Bestimmung des Standorts sowie der Ausrichtung des Radars 10 basierend auf der Information betreffend die Genauigkeit des mittels des satellitengestützten Navigationssystems, des mittels des Trägheitsnavigationssystems sowie des auf Basis des vorgenannten Abgleichs ermittelten 104 Standorts sowie der Ausrichtung des Radars 10 durchgeführt wird 118. Bevorzugterweise werden zu diesem Zweck jeweils ermittelte 104 Informationen betreffend den Standort sowie die Ausrichtung des Radars 10 anhand der jeweils zugeordneten Genauigkeit gewichtet. Mit hohen Unsicherheiten belegte Informationen betreffend den Standort sowie die Ausrichtung des Radars 10 können auf diese Weise unberücksichtigt bleiben oder lediglich mit einem geringem Gewicht in die Bestimmung 118 des Standorts sowie der Ausrichtung des Radars 10 mit einbezogen werden. Dies ermöglicht es, den Standort sowie die Ausrichtung des Radars 10 rasch, aufwandsgünstig sowie mit einer hohen Genauigkeit zu bestimmen 118.

In einem bevorzugten Anwendungsfall wird der Radar 10 bei einer Überwachung und/oder Verteidigung eines vorbestimmten Luftraums verwendet. Beispielhaft kann der als Radar 10 ausgeführte Sensor 10 in einem mobilen Radarsystem 12 eines nicht näher dargestellten Sensor-Effektor-Systems verwendet werden, um Effektoren rasch und zuverlässig hin zu einem zu bekämpfenden Zielobjekt zu steuern. Dadurch können zu bekämpfenden Zielobjekte einfach und zuverlässig aufgefasst und verfolgt werden. Des Weiteren kann eine Trajektorie eines zu bekämpfenden Zielobjekts mit einer verbesserten Qualität prognostiziert werden. Bevorzugterweise wird der vorbestimmte Luftraum mittels des mobilen Radarsystems 12 in einem stationären Betriebszustand überwacht und/oder verteidigt. In diesem stationären Betriebszustand wird der Standort sowie die Ausrichtung des Radars 10 des mobilen Radarsystems 12 auf die zuvor beschriebene Weise ermittelt 104. Dies ermöglicht es, den Standort und/oder die Ausrichtung des mobilen Radarsystems 12 bedarfsgerecht anzupassen. Für verschiedene stationäre Betriebszustände kann sodann rasch und aufwandsgünstig der Standort und/oder die Ausrichtung bestimmt werden 118. Insbesondere ermöglicht dies eine hohe Einsatzbereitschaft des Radars 10, welche je bedarfsgerecht schnell wiederhergestellt werden kann.

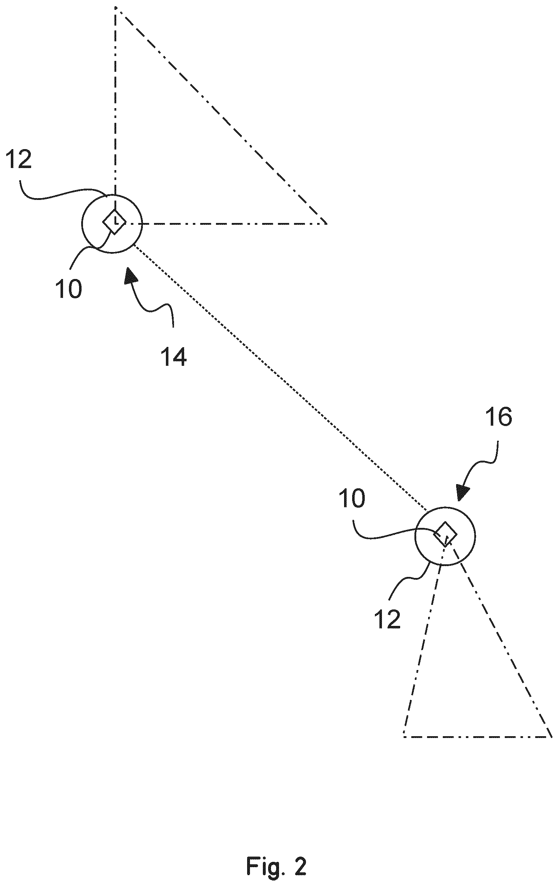

FIG 2 zeigt in einer schematischen Darstellung ein mobiles Radarsystem 12 zur Überwachung eines Luftraums mit einem Radar 10. Insbesondere handelt es sich bei dem mobilen Radarsystem 12 sowie dem Radar 10 um jeweils ein mobiles Radarsystem 12 sowie ein Radar 10 der im Zusammenhang mit FIG 1 beschriebenen Art.

Das vorliegend beschriebene Ausführungsbeispiel des mobilen Radarsystems 12 ist dazu eingerichtet, das im Zusammenhang mit FIG 1 beschriebene Beispiel des Verfahrens 100 in verschiedenen stationären Betriebszuständen 14, 16 durchzuführen.

Beispielhaft illustriert FIG 2 das Ausführungsbeispiel des mobilen Radarsystems 12 mit dem Radar 10 in einem ersten stationären Betriebszustand 14. Eine Ausrichtung sowie ein Standort des Radars 10 sind exemplarisch durch ein Dreieck in Strich-Punkt-Darstellung veranschaulicht. Aufgrund eines sich ändernden Einsatzszenarios muss das mobile Radarsystem 12 beispielhaft von dem ersten stationären Betriebszustand 14 in einen zweiten stationären Betriebszustand 16 verbracht werden. In dem zweiten Betriebszustand 16 unterscheidet sich sowohl der Standort als auch die Ausrichtung des Radars 10 des mobilen Radarsystems 12 im Vergleich zu dem ersten stationären Betriebszustand 14. Ein Versatz des Standorts wird beispielhaft mittels der gestrichelten Linie veranschaulicht. Überdies wird die Ausrichtung eines Sichtbereichs des Radars 10 verändert und exemplarisch relativ zu dem ersten stationären Betriebszustand 14 gedreht. Bevorzugterweise wird sodann auf Basis des im Zusammenhang mit FIG 1 beschriebenen Beispiels des Verfahrens 100 der Standort sowie die Ausrichtung des Radars 10 des mobilen Radarsystems 12 in dem zweiten stationären Betriebszustand 16 ermittelt 104. Dadurch kann rasch und zuverlässig eine Einsatzbereitschaft des mobilen Radarsystems 12 wiederhergestellt werden.

### Bezugszeichenliste

- 100: Verfahren
- 102: Umgebung erfassen
- 104: Standort und Ausrichtung ermitteln
- 106: digitales Modell erstellen
- 108: Informationen aus Stördaten gewinnen
- 110: Stördaten erfassen
- 112: bewegende Objekte extrahieren
- 114: Informationen ermitteln
- 116: Genauigkeit ermitteln
- 118: Bestimmung durchführen

- 10: Sensor/Radar
- 12: Mobile Vorrichtung/mobiles Radarsystem
- 14: erster stationärer Betriebszustand
- 16: zweiter stationärer Betriebszustand

## Patentansprüche

1. Verfahren (100), bei welchem
- mittels eines Sensors (10) eine Information betreffend eine Form einer Umgebung erfasst wird (102);
- ein Standort sowie eine Ausrichtung des Sensors (10) auf Basis eines Abgleichs der erfassten (102) Information betreffend die Form der Umgebung mit vorbekannten topographischen Daten ermittelt wird (104).

2. Verfahren (100) nach Anspruch 1,
bei welchem
- mittels des Sensors (10) als Information betreffend die Form der Umgebung ein Höhenprofil der Umgebung erfasst wird (102);
- der Standort sowie die Ausrichtung des Sensors (10) auf Basis eines Abgleichs der erfassten (102) Information betreffend die Form der Umgebung mit in einem digitalen Oberflächenmodell hinterlegten vorbekannten topographischen Daten ermittelt wird (104).

3. Verfahren (100) nach Anspruch 1 oder 2,
bei welchem
- auf Basis der mittels des Sensors (10) erfassten Informationen betreffend die Form der Umgebung ein digitales Modell erstellt wird (106);
- der Standort sowie die Ausrichtung des Sensors (10) anhand eines Abgleichs des erstellten (106) digitalen Modells mit einem vorbekannten digitalen Oberflächenmodell ermittelt wird (104).

4. Verfahren (100) nach einem der vorhergehenden Ansprüche,
bei welchem die Information betreffend die Form der Umgebung aus mittels des Sensors (10) erfassten (110) Stördaten gewonnen wird (108).

5. Verfahren (100) nach Anspruch 4,
bei welchem die Information betreffend die Form der Umgebung derart aus den mittels des Sensors (10) erfassten (110) Stördaten gewonnen wird (108), dass zunächst sich bewegende Objekte aus diesen Stördaten extrahiert werden (112).

6. Verfahren (100) nach einem der vorhergehenden Ansprüche,
bei welchem
- auf Basis der mittels des Sensors (10) erfassten Informationen betreffend die Form der Umgebung aufeinanderfolgend mehrere digitale Modelle erstellt werden (106);
- auf Basis eines Vergleichs der genannten mehreren digitalen Modelle eine Information betreffend eine Klassifizierung einer Geländeart, sich langsam bewegender Objekte, sich aus einer Deckung innerhalb eines Sichtbereichs des Sensors (10) heraus bewegende Objekte und/oder eine Mehrwegausbreitung ermittelt wird (114).

7. Verfahren (100) nach einem der vorhergehenden Ansprüche,
bei welchem der Standort sowie die Ausrichtung des Sensors (10) zusätzlich auf Basis von Informationen eines satellitengestützten Navigationssystems und/oder eines Trägheitsnavigationssystems ermittelt wird (104).

8. Verfahren (100) nach Anspruch 7,
bei welchem eine Information betreffend eine Genauigkeit eines mittels des globalen satellitengestützten Navigationssystems und/oder des Trägheitsnavigationssystems ermittelten Standorts sowie einer Ausrichtung des Sensors (10) mithilfe des auf Basis des vorgenannten Abgleichs ermittelten (104) Standorts sowie der Ausrichtung des Sensors (10) ermittelt wird (116).

9. Verfahren (100) nach Anspruch 7 oder 8,
bei welchem basierend auf der Information betreffend die Genauigkeit des mittels des satellitengestützten Navigationssystems, mittels des Trägheitsnavigationssystems und/oder des auf Basis des vorgenannten Abgleichs ermittelten (104) Standorts sowie der Ausrichtung des Sensors (10) eine Bestimmung des Standorts sowie der Ausrichtung des Sensors (10) durchgeführt wird (118).

10. Verfahren (100) nach einem der vorhergehenden Ansprüche,
bei welchem als Sensor (10) ein Radar (10) vorgesehen wird, welcher bei einer Überwachung und/oder Verteidigung eines vorbestimmten Luftraums verwendet wird.

11. Verfahren (100) nach einem der vorhergehenden Ansprüche,
bei welchem der Sensor (10) als mobiler Sensor (10) ausgeführt ist, dessen Standort sowie Ausrichtung in einem stationären Betriebszustand ermittelt wird (104).

12. Mobile Vorrichtung (12) zur Überwachung eines Luftraums mit einem Sensor (10), welche dazu eingerichtet ist, das Verfahren (100) nach einem der vorhergehenden Ansprüche in einem stationären Betriebszustand (14, 16) durchzuführen.

13. Mobile Vorrichtung (12) nach Anspruch 12,
**dadurch gekennzeichnet,**
**dass** die mobile Vorrichtung (12) als ein mobiles Radarsystem (12) zur Überwachung des Luftraums mit einem Radar (10) ausgeführt ist.

14. Computerprogramm, welches bei dessen Ausführung die mobile Vorrichtung (12) gemäß einem der Ansprüche 12 oder 13 dazu veranlasst, das Verfahren (100) nach einem der Ansprüche 1 bis 11 durchzuführen.

15. Computerlesbares Medium aufweisend Instruktionen, welche die mobile Vorrichtung (12) gemäß einem der Ansprüche 12 oder 13 dazu veranlasst, das Verfahren (100) nach einem der Ansprüche 1 bis 11 durchzuführen.
